# EUROPEAN PATENT APPLICATION

(11) **EP 1 988 453 A1**
(43) Date of publication of application: **05.11.2008**
(21) Application number: 08005670.8
(22) Date of filing: 26.03.2008
(51) Int. Cl.: G06F 9/44

(54) **Function calculator having help display function**

(30) Priority: 30.03.2007 JP 2007094740; 25.01.2008 JP 2008015301
(71) Applicant: Casio Computer Co., Ltd., Tokyo 151-8543 (JP)
(72) Inventor: Kaneko, Ryo Intellectual Property Dept., Hamura-shi Tokyo 205-8555 (JP)
(74) Representative: Grünecker, Kinkeldey, Stockmair & Schwanhäusser Anwaltssozietät

(57) **Abstract**

A function calculator includes a display unit (13) and an input unit which inputs an arithmetic expression containing a function in accordance with user operation. When the input unit inputs an arithmetic expression, the calculator causes the display unit (13) to display the arithmetic expression upon the input operation. The function calculator then determines whether the cursor (C) present on the arithmetic expression displayed on the display unit (13) is located at a portion corresponding to a function (Fn). Upon determining that the cursor (C) is at a portion corresponding to a function (Fn), the calculator displays format explanatory information about the function (Fn) on another window (H) on the display unit (13).

## Description

The present invention relates to a function calculator, e.g., an electronic calculator called a scientific calculator, which inputs and computes a series of arithmetic expressions containing functions.

Conventionally, scientific electronic calculators have been widely used. Such scientific calculators can perform calculations when input with various function expressions, such as trigonometric functions, e.g., [sin], [cos], and [tan], the differential function [d/dx], the integral function [∫dx], the logarithmic function [log], and the pair (permutation) function [nPr].

Some scientific calculators have two types of display modes, i.e., a Line display mode and a 2D display mode (also called a natural display mode or a Math mode), as display modes of displaying arithmetic expressions input by a user. The 2D display mode displays an input arithmetic expression in a natural form as written in a textbook. The Line display mode displays an arithmetic expression within one line.

While the scientific calculator is set in the 2D display mode, therefore, the user can use the calculator by referring to the display form of an arithmetic expression for a function and determine the positions and types of data (arguments) to input. While the calculator is set in the Line display mode, the user cannot use the calculator unless he/she knows the input order of arguments.

A large variety of types of function expressions can be input into such a scientific calculator, and the number of arguments which need to be input and input formats vary depending on the types of function expressions. For example, in integral calculation, after the key of the integral function [∫dx] is input, it is necessary to input the mathematical expression (f(x)) as a first argument, a start value as a second argument, and an end value as a third argument in the order named.

When calculating a given function expression, it is difficult for the user to master the use of the calculator by memorizing all the input formats of arguments and the like.

Under the circumstance, Jpn. Pat. Appln. KOKAI Publication No. 11-161410 discloses a scientific calculator having a function help function for displaying usable functions in the form of a menu, and, when a given function expression is selected in the menu display, displaying an explanation of the selected function expression and the input format of an argument.

When inputting a desired arithmetic expression to the conventionally proposed scientific calculator, the user uses the calculator guidance and displays explanations of the respective function expressions displayed in menu form and the input formats of arguments by using the help display function. Although the user can directly input and use a function expression selected from the menu display window, he/she cannot make the calculator display the type of argument of a function at each input position and the corresponding input format during the process of actually inputting and assembling an arithmetic expression containing functions.

For this reason, when, for example, the user forms a desired arithmetic expression by inputting, in a given function expression, a different kind of function expression as an argument upon enclosing the argument in parentheses, the input positions (input formats) of the respective arguments of several function expressions contained in the arithmetic expression are intricately nested. This makes it difficult for the user to know specific positions and specific arguments to input.

The present invention provides a function calculator which can display explanatory information of a function, as needed, when an arithmetic expression containing the function is to be input.

A function calculator comprising: a display unit; input means for inputting an arithmetic expression containing a function in accordance with user operation; input expression display control means for causing the display unit to display an arithmetic expression input by the input means upon input of the arithmetic expression; determination means for determining whether a cursor present on an arithmetic expression displayed on the display unit is located at a position of a portion corresponding to a function; and explanatory information display control means for, when the determination means determines that the cursor is located at a portion corresponding to a function, causing the display unit to display format explanatory information about the function on another window.

A help display method for a function calculator including a display unit and a key input unit which inputs an arithmetic expression containing a function, the method comprises steps of: causing the display unit to display an arithmetic expression input from the key input unit upon input of the arithmetic expression; determining whether a cursor present on an arithmetic expression displayed on the display unit is located at a position of a portion corresponding to a function; and when it is determined in the determining step that the cursor is located at a portion corresponding to a function, causing the display unit to display format explanatory information about the function on a help window.

The invention can be more fully understood from the following detailed description when taken in conjunction with the accompanying drawings, in which:
FIG. 1 is a front view showing the external arrangement of a electronic calculator according to an embodiment of the present invention;
FIG. 2 is a block diagram showing the arrangement of the electronic circuit of the electronic calculator;
FIG. 3 is a view showing the arrangement of a main data memory secured in a RAM of the electronic calculator;
FIG. 4 is a flowchart showing computation mode processing by the electronic calculator;
FIG. 5 is a view showing an input display operation example (first example) for an arithmetic expression containing functions when a syntax help window H is displayed in computation mode processing by the electronic calculator;
FIG. 6 is a view showing an input display operation example (second example) for an arithmetic expression containing functions when a syntax help window H is displayed in computation mode processing by the electronic calculator;
FIG. 7 is a view showing a display operation example performed upon the execution of an arithmetic expression containing functions in a case in which the syntax help window H is displayed in computation mode processing by the electronic calculator;
FIG. 8 is a view showing display operation examples in the 2D display mode and the Line display mode in a case in which an arithmetic expression containing functions is input in computation mode processing by the electronic calculator; and
FIG. 9 is view showing a display operation example for the syntax help window H when an arithmetic expression containing functions is input by using a calculation history in computation mode processing by the electronic calculator.

An embodiment of the present invention will be described below with reference to the views of the accompanying drawing.

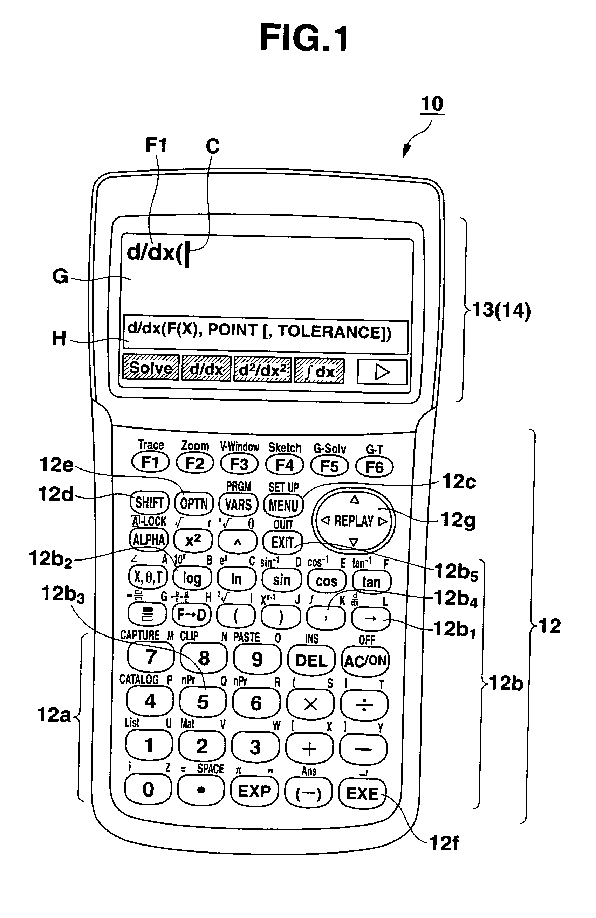

FIG. 1 is a front view showing the external arrangement of a scientific calculator 10 according to an embodiment of the present invention.

The main body case of the scientific calculator 10 has a key input unit 12 provided in a range extending from the lower end of the front surface of the main body to about 2/3 of the length of the case. This case has a liquid crystal display unit 13 provided in a range extending from the upper end to about 1/3 of the length. A transparent tablet 14 for the detection of a touch position is superimposed on the liquid crystal display unit 13.

The key input unit 12 includes numerical keys 12a, function/symbol/operator keys 12b, a "MENU" key 12c, a "SHIFT" key 12d, an "OPTN" key 12e, an "EXE" key 12f, cursor keys 12g, and the like.

The numerical keys 12a include a numerical value input key group comprising an array of the ten keys "0" to "9" and the decimal point key".".

The function/symbol/operator keys 12b include function symbol keys such as the keys "log", "In", "sin", "cos", and "tan" and operator keys such as the keys "+", "-", "x", "÷", and "=" which are operated to input arithmetic expressions or function expressions.

The "MENU" key 12c is operated to display a selection menu for various types of operation modes, e.g., a computation mode of inputting an arbitrary arithmetic expression such as an arithmetic operation expression or a functional operation expression and performing arithmetic processing, a graph mode of inputting an arbitrary function expression and drawing a corresponding graph, and a program mode of inputting an arbitrary program and performing corresponding calculation processing.

When designating and inputting various kinds of symbols and functions written on the upper left portions of the key tops of the key input unit 12, the user operates the "SHIFT" key 12d in combination with the corresponding keys. When, for example, inputting the differential function [d/dx], the user simultaneously operates the "SHIFT" key 12d and the "→" key 12b1.

When designating and inputting various kinds of symbols and functions written on the upper right portions of the respective key tops of the key input unit 12, the user operates the "OPTN" key 12e in combination with the corresponding keys.

The user operates the "EXE" key 12f to confirm selected data or give an instruction to execute calculation processing.

The user operates the cursor keys "↑", "↓", "←", and "→" 12g to, for example, select displayed data, shift data, and move a cursor C.

The uppermost portion of the key input unit 12 has the function keys "F1" to "F6" which are selectively operated to activate various functions such as a drawing/display function for graphs and graphic patterns.

The scientific calculator 10 has a function for, when the user inputs an arithmetic expression containing a predetermined function, displaying, as another window, a syntax help window H (to be described in detail later) indicating the type of function and format explanatory information of an argument to be input.

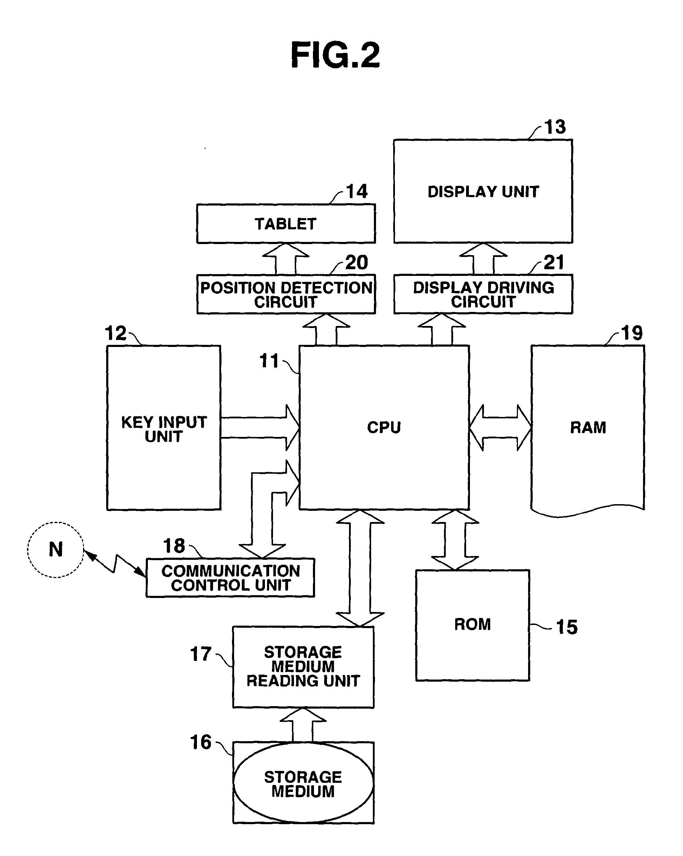

FIG. 2 is a block diagram showing the arrangement of the electronic circuit of the scientific calculator 10.

The electronic circuit of the scientific calculator 10 includes a control unit (CPU) 11 comprising a computer and the like.

The control unit (CPU) 11 activates a system program stored in advance in a ROM 15 in accordance with key input data input from the key input unit 12 or touch position data input from the tablet 14, superimposed on the display screen of the liquid crystal display unit 13, via a position detection circuit 20, and performs operation control on each circuit component by using a RAM 19 as a work memory. Note that the control unit (CPU) 11 can use a calculator control program, which is stored in advance in an external storage medium 16, by causing a storage medium reading unit 17 to read out the program, or a calculator control program from another computer terminal by causing a communication control unit 18 to receive it via a communication network N.

The key input unit 12, liquid crystal display unit 13, tablet 14, position detection circuit 20, ROM 15, RAM 19, storage medium reading unit 17, and communication control unit 18 are connected to the control unit (CPU) 11. The liquid crystal display unit 13 is connected to the control unit (CPU) 11 via a display driving circuit 21.

The tablet 14 is superimposed on the display screen of the liquid crystal display unit 13, and generates a voltage signal corresponding to a touch position. The position detection circuit 20 outputs coordinate data corresponding to the touch position on the display screen of the position detection circuit 20 on the basis of the voltage signal output from the tablet 14. The control unit (CPU) 11 determines the contents of user operation in accordance with this touch position coordinate data.

The ROM 15 stores in advance system program data for controlling the overall processing in the electronic circuit of the scientific calculator 10, and also stores in advance control program data corresponding to various kinds of operation modes which can be selected on a selection menu window for the above operation modes such as computation mode processing, graph mode processing, and program mode processing.

The control program for computation mode processing, which is stored in the ROM 15 in advance, also stores information for explaining the types of functions and the input formats of arguments concerning predetermined types of functions which are to be input as arithmetic expressions in the scientific calculator 10 and require help display for the user. Functions which require help display include differentiation, integration, logarithm, and the like. Functions which do not require help display include a trigonometric function. The ROM 15 further stores a subprogram for detecting a function corresponding to the position of the cursor C and displaying the format explanatory information of the function as the syntax help window H while an arithmetic expression is input or an arithmetic expression stored in the RAM 19 is called and displayed.

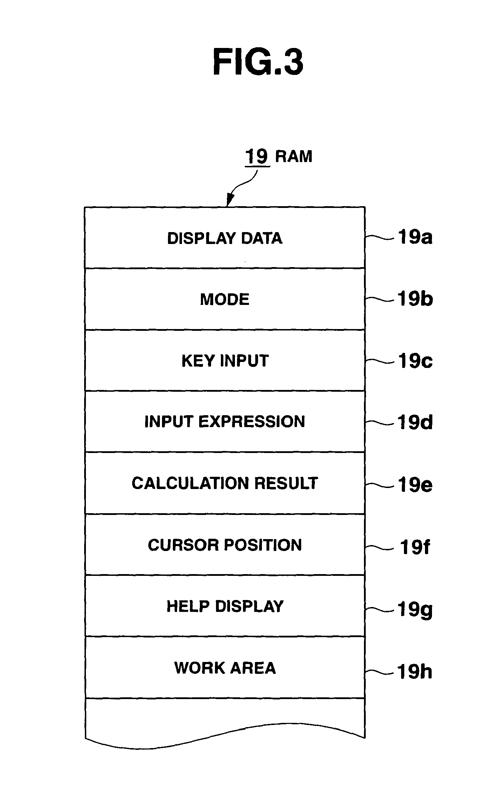

FIG. 3 is a view showing the arrangement of a main data memory secured in the RAM 19 of the scientific calculator 10.

The RAM 19 comprises various types of data memories such as a display data memory 19a, mode data memory 19b, key input memory 19c, input expression memory 19d, calculation result memory 19e, cursor position memory 19f, help display memory 19g, and work area 19h.

The display data memory 19a stores display data as bitmapped pattern data to be displayed on the liquid crystal display unit 13 in the above various types of operation modes, e.g., mathematical expression data and calculation result data to be input/edited in, for example, the computation mode.

The mode data memory 19b stores mode data representing various types of operation modes which can be selected on the selection menu window for the above operation modes.

The key input memory 19c temporarily stores the data of a key code input upon the key operation of the key input unit 12 for each key operation.

The input expression memory 19d stores arbitrary mathematical expression (arithmetic expression) data which has been key-input. With regard to a function expression, the input expression memory 19d stores function notation data representing the type of function and necessary argument data in a predetermined order.

The calculation result memory 19e stores the data of computation results obtained by computation processing on the basis of mathematical expression data stored in the input expression memory 19d.

The cursor position memory 19f stores the position data of the cursor C on the display data which is stored in the display data memory 19a and displayed/output on the liquid crystal display unit 13. For example, while arithmetic expression data is input/displayed, the cursor position memory 19f stores data representing the cursor position in the displayed arithmetic expression as data corresponding to the position of each character/symbol in the arithmetic expression stored in the input expression memory 19d.

The help display memory 19g stores the format explanatory information of a function associated with a cursor position in an arithmetic expression input in computation mode processing, which is read out from the ROM 15, and also stores display position data for displaying the format explanatory information as the syntax help window H on an expression input window G.

The work area 19h temporarily stores data input/output by the control unit (CPU) 11 in control processing in each type of operation mode.

The calculation function of the scientific calculator 10 having the above arrangement will be described next.

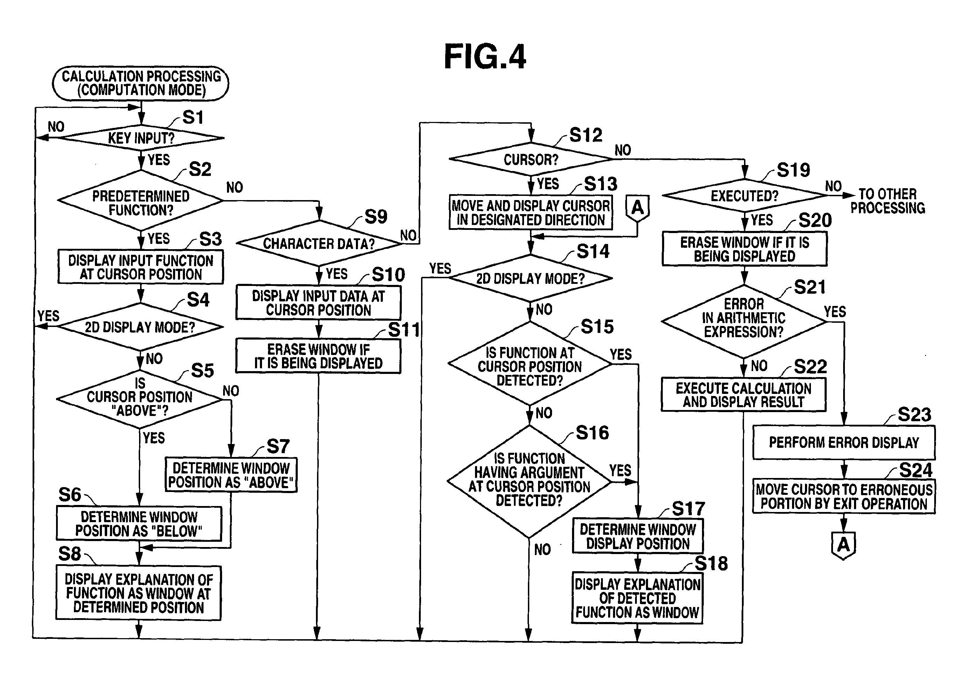

FIG. 4 is a flowchart showing computation mode processing by the scientific calculator 10.

When the user operates the "MENU" key 12c, the calculator displays the selection menu for the respective types of operation modes such as the computation mode, graph mode, and program mode. When the user operates to select computation mode processing from the selection menu, the scientific calculator 10 enters the computation mode processing shown in FIG. 4. When entering the computation mode processing, the calculator displays the expression input window G first, and waits for the input of an arithmetic expression.

Upon determining a key input from the key input unit 12 (YES in step S1), the calculator determines whether a predetermined function requiring help display for the user, e.g., the differential function [d/dx] or the logarithmic function [log], is input (step S2). Upon determining the input of a predetermined function (YES in step S2), the calculator displays a symbol representing the key-input function at the position of the cursor C on the expression input window G (step S3) .

The calculator then determines whether the current expression display mode is the 2D display mode of displaying the arithmetic expression in an arrangement like that written in a textbook or the Line display mode of displaying the arithmetic expression in a line (step S4).

In the 2D display mode, when, for example, a mixed fraction is to be input and displayed, the fractional expression is displayed in a natural form like that written in a textbook such that the integral part, numerator, and denominator constituting the fraction are arranged before the fractional symbol and above and below the fractional symbol, respectively. In the Line display mode, the integral part, numerator, and denominator constituting the fraction expression are delimited by special symbols and displayed within one line. The user sets in advance the scientific calculator 10 in one of these display modes.

If the calculator determines in step S4 that the current expression display mode set is not the 2D display mode, i.e., the Line display mode is set (NO in step S4), the calculator determines whether the displayed cursor C is located in the upper side of the predetermined display area of the display unit 13 when it is divided into the upper and lower sides (step S5).

Upon determining that the cursor C is located on the upper side, the calculator determines the position where the syntax help window H is to be displayed is "below" (step S6). Upon determining that the cursor C is not located on the upper side, the calculator determines that the position where the syntax help window H is to be displayed is "above" (step S7).

The calculator reads out the format explanatory information of key-input function data from the ROM 15, and displays it as the syntax help window H at the position determined in step S6 or S7. That is, the syntax help window H is displayed as another window on the expression input window G at a position spaced apart upward or downward from the cursor C (step S5).

If it is determined in step S4 that the 2D display mode is set (YES in step S4), the currently input function data is displayed in an arrangement like that written in a textbook. The user can easily recognize the type of function and the input format of an argument. Therefore, the syntax help window H of the function data is not displayed.

Upon determining that the key input from the key input unit 12 is not the input of a function requiring help display (NO in step S2), the calculator determines whether the key input is the input of data (step S9). A key that inputs data is a numeral input key, arithmetic operator key, character data input key, or function key that requires no help display. Upon determining that data is input (YES in step S9), the calculator displays the key-input numeral, arithmetic operator, character data, or function requiring no help display at the position of the cursor C on the expression input window G (step S10).

Along with this operation, if the syntax help window H is being displayed, the window H is erased (step S11). This prevents the window from hindering input operation of an arithmetic expression.

Upon determining that a key is input from the key input unit 12 (YES in step S1) and the cursor keys 12g is input (YES in step S12), the calculator moves the displayed cursor C in the direction designated by the cursor keys 12g and displays it along with the input arithmetic expression on the expression input window G (step S13).

Upon moving and displaying the cursor C, the calculator determines whether the current expression display mode is the 2D display mode of displaying an arithmetic expression in an arrangement like that written in a textbook or the Line display mode of displaying the arithmetic expression in a line (step S14).

Upon determining that the current expression display mode is the Line display mode (NO in step S14), the calculator determines whether there is function notation data, i.e., a symbol representing a function, at the position of the cursor C displayed on the input arithmetic expression (step S15). If there is function notation data at the position of the cursor C, the presence of a function is detected. If no function is detected at the position of the cursor C (NO in step S15), the calculator determines whether the position of the cursor C coincides with argument data of the function (step S16). If argument data is at the position of the cursor C, a function associated with this argument is detected.

Upon detecting in step S15 or S16 that there is a function at the position of the cursor C, the calculator determines the display position of the window as "above" or "below" in the same manner as in steps S5 to S7 (step S17). The calculator then reads out the format explanatory information of the function from the ROM 15, and displays it as the syntax help window H as another window at the position determined as "above" or "below" on the expression input window G (step S18).

Assume that the user designates the execution of calculation by operating the "EXE" key 12f after inputting a desired arithmetic expression onto the expression input window G by key operation (YES in step S19). In this case, if the syntax help window H is being displayed, the window H is erased (step S20).

The calculator then determines the presence/absence of erroneous data in the execution of calculation on the basis of the arrangement of function data, arithmetic operator data, numerical data, variable character data, and the like which constitute the arithmetic expression stored in the input expression memory 19d (step S21).

Upon determining in step S21 that there is no error on the input arithmetic expression (NO in step S21), the calculator executes calculation processing corresponding to the input arithmetic expression. The calculator then writes the calculation result data in the calculation result memory 19e, and displays/outputs the data onto the display unit 13 (step S22).

Upon determining that there is erroneous input data on the input arithmetic expression (YES in step S21), the calculator displays an error message (step S23). When the user operates an "EXIT" key 12b5, the calculator moves the cursor C to the position of the erroneous input data on the input arithmetic expression (step S24). Upon moving the cursor to the erroneous data position, the calculator then performs processing after step S14.

Upon moving the cursor C to the position of the erroneous input data on the input arithmetic expression and determining that the current expression display mode is the Line display mode (NO in step S14), the calculator determines whether there is the notation data of a function requiring help display or the argument data of a function requiring help display at the position of the cursor C. Upon detecting that there is such a function at the cursor position (YES in step S15 or S16), the calculator reads out the format explanatory information of the detected function data from the ROM 15, and displays the information as the syntax help window H as another window at an upper or lower position on the expression input window G (step S18).

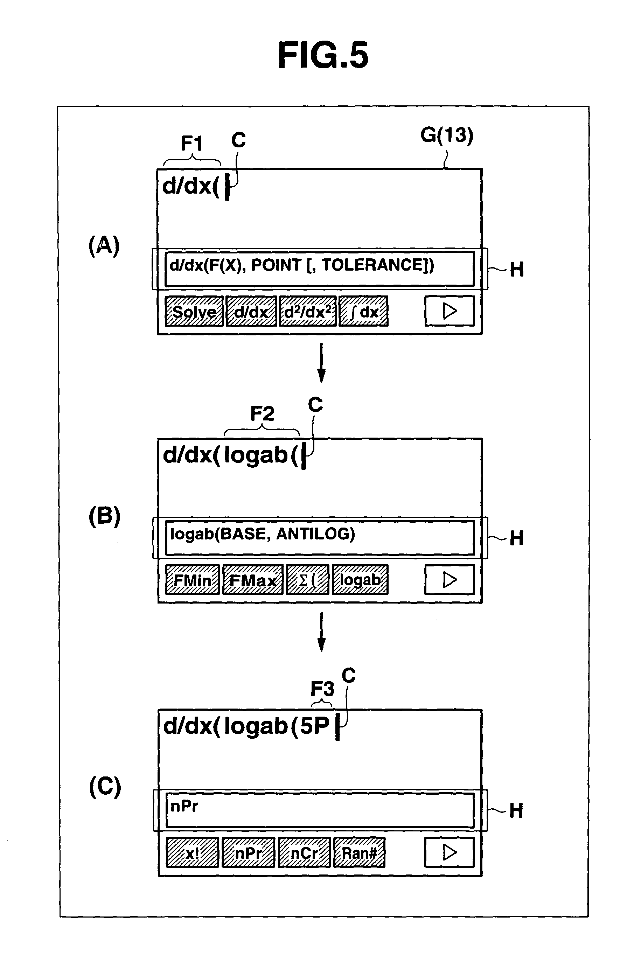

FIG. 5 is a view showing an input display operation example (first example) for an arithmetic expression containing functions in computation mode processing by the scientific calculator 10.

The following exemplifies the execution of differential calculation. In differential calculation by the scientific calculator, a differential coefficient at a designated point with respect to an input expression f(x) can be approximately obtained. Data to be input as arguments include the expression f(x) for the execution of differential calculation using a variable x, a point where a differential coefficient is to be obtained, and a tolerance. If the user inputs no tolerance, a default value is set, and calculation is executed.

When the user key-inputs a differential function by simultaneously operating the "SHIFT" key 12d and the "→" key 12b1 of the key input unit 12 in the computation mode, the calculator displays "d/dx(" F1 on the expression input window G, as indicated by "(A)" in FIG. 5 (steps S1 to S3). Upon determining that the current expression display mode is the Line display mode (NO in step S4), the calculator determines that the position of the cursor C is on the upper side of the window, and determines the window position as "below" (steps S5 and S6). The calculator then displays the format explanatory information "d/dx(F(x),POINT[,TOLERANCE]) describing the notation "d/dx" representing that the type of function is a differential function and the input format of the argument as the syntax help window H along the lower end on the expression input window G (step S8). The syntax help window H informs the user that he/she needs to input the expression f(x), a point where a differential coefficient is to be obtained, and a tolerance.

As indicated by "(B)" in FIG. 5, when the user operates a "log" key 12b2 of the key input unit 12, the calculator displays the logarithmic function "logab(" F2 (steps S1 to S3). Upon determining that the current expression display mode is the Line display mode (NO in step S4), the calculator determines that the position of the cursor C is on the upper side of the window, and determines the window position as "below" (steps S5 and S6). The calculator displays the format explanatory information "logab(BASE,ANTILOG)" describing the type of the logarithmic function "logab" and the input format of the argument as the syntax help window H along the lower end on the expression input window G (step S8). The syntax help window H informs the user that he/she needs to input the base and antilogarithm of a logarithm.

As indicated by "(C)" in FIG. 5, when the user sequentially inputs the content of the pair function (permutation) [nPr] F3 by simultaneously operating the "SHIFT" key 12d and a "5" key 12b3 of the key input unit 12, the corresponding information is displayed on the display window (steps S1 to S3) in the same manner as described above. Upon determining that the current expression display mode is the Line display mode instead of the 2D display mode (NO in step S4), the calculator displays the format explanatory information "nPr" describing the type of pair function (permutation) [nPr] input and displayed in accordance with the position of the cursor C and the input format of arguments n and r of the function as the syntax help window H along the lower end on the expression input window G (step S8).

Even when the user inputs an arithmetic expression by combining a plurality of functions in a nested state in this manner, the syntax help window H allows the user to properly comprehend the types of the respective functions and the format of arguments of the functions.

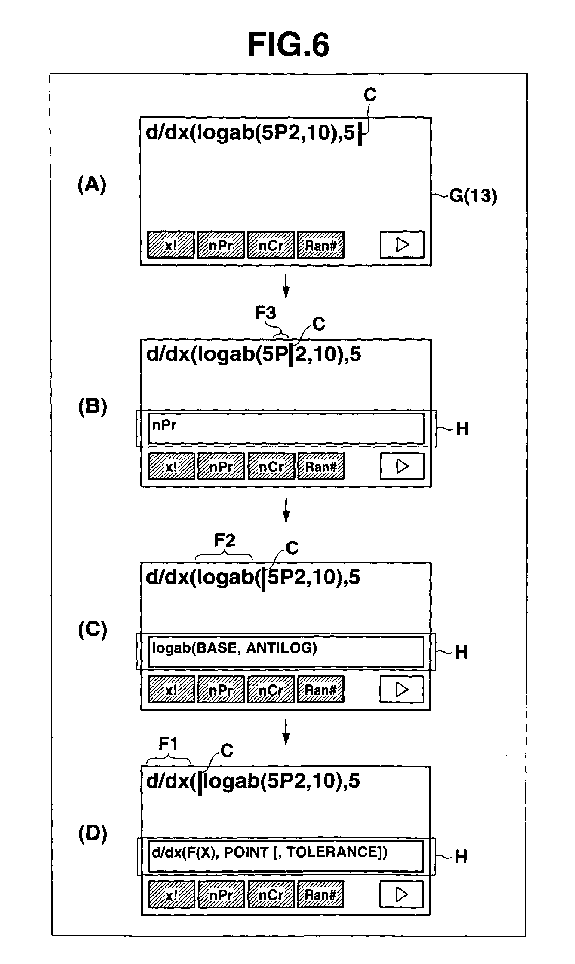

FIG. 6 is a view showing an input display operation example (second example) when the syntax help window H is displayed upon cursor movement in the computation mode processing by the scientific calculator 10.

"(A)" in FIG. 6 indicates a state in which an arithmetic expression as a combination of the differential function "d/dx", logarithmic function "logab", and pair function (permutation) "nPr" is input and displayed. In this state, as indicated by "(B)" in FIG. 6, the user moves the position of the displayed cursor C to a position in the pair function (permutation) "nPr" F3 upon input of the arithmetic expression (step S12 and S13). Upon determining that the current expression display mode is the Line display mode (NO in step S14), the calculator displays the format explanatory information "nPr" describing the type of the above pair function (permutation) "nPr" detected in accordance with the position of the cursor C and the input format of arguments of the function as the syntax help window H along the lower end on the expression input window G (step S15 to S18).

As indicated by "(C)" in FIG. 6, upon determining that the current expression display mode is the Line display mode (NO in step S14) when the user moves the cursor C to a position on an argument of the logarithmic function "logab(" F2 (steps S12 and S13), the calculator displays the format explanatory information [logab(BASE,ANTILOG)" describing the type of the above logarithmic function "logab" detected in accordance with the position of the cursor C and the input format of an argument of the function along the lower end on the expression input window G (steps S15 to S18).

Upon determining that the current expression display mode is the Line display mode (NO in step S14) when the user moves the cursor C to a position on an argument of the differential function "d/dx(" F1 (steps S12 and S13), as indicated by "(D)" in FIG. 6, the calculator displays the format explanatory information "d/dx(F(X),Point[,TOLERANCE))" describing the type of the above differential function "d/dx" and the input format of the arguments of the function along the lower end on the expression input window G (steps S15 to S18).

Even after the user inputs an arithmetic expression, when he/she moves the cursor C on the arithmetic expression, he/she can easily recognize the type of function at the position on the arithmetic expression which is indicated by the cursor C and the format of the arguments of the function by looking at the syntax help window H. This allows the user to check whether an arithmetic expression containing a desired function has been properly input.

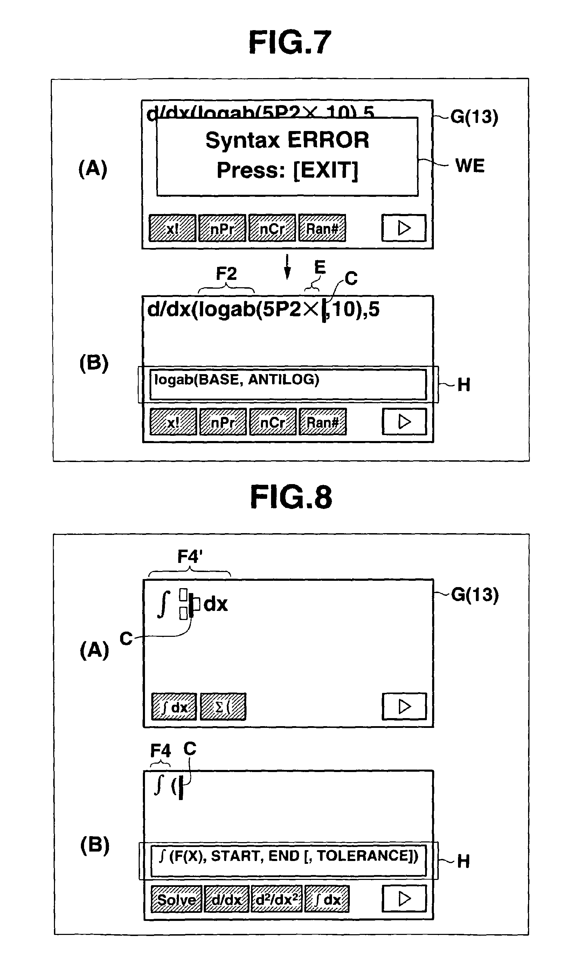

FIG. 7 shows a display operation example to be performed to display the syntax help window H at the time of occurrence of an error in computation mode processing by the scientific calculator 10.

Upon determining that there is erroneous input data in the arithmetic expression when the user designates the execution of calculation by operating the "EXE" key 12f after inputting an arithmetic expression (YES in step S19), the calculator displays a "syntax ERROR warning window" WE as indicated by "(A)" in FIG. 7 (steps S21 to S23). When this error message is displayed and the user operates the "EXIT" key 12b5, the cursor C is moved and displayed at the position of input data "x" E on the input arithmetic expression "d/dx (logab (5P2x, 10) , 5" (step S24).

Along with this operation, the calculator detects the position of the cursor C as the position of an argument on "logab", and displays the format explanatory information "logab(BASE,ANTILOG)" describing the type of the logarithmic function "logab" F2 and the input format of the arguments of the function as the syntax help window H along the lower end on the expression input window G (steps S14 to S18).

As described above, even if there is an error in an input arithmetic expression, when the user operates the "EXIT" key 12b5, the cursor C is moved to the error position and the syntax help window H associated with a function at the cursor position is displayed. This makes it possible to smoothly execute counter processing after the user erroneously inputs an arithmetic expression.

FIG. 8 is a view showing a difference in display operation between the 2D display mode and the Line display mode in computation mode processing by the scientific calculator 10.

When the user inputs an integral function while the expression display mode of the scientific calculator 10 is set in the 2D display mode, the calculator displays the integral function "∫dx" F4' (steps S1 to S3), as indicated by "(A)" in FIG. 8. In this case, upon determining that the current expression display mode is the 2D display mode (YES in step S4), the calculator displays the input arithmetic expression in an arrangement like that written in a textbook. The user can understand the type of the function and the input format of the arguments of the function, and hence the calculator does not display the syntax help window H concerning the function.

Assume that the expression display mode of the scientific calculator 10 is set to the Line display mode. In this case, when the user inputs an integral function, the calculator displays the integral function "∫dx" F4, as indicated by "(B)" in FIG. 8 (steps S1 to S3). In this case, upon determining that the current expression display mode is the Line display mode, the calculator displays the format explanatory information "∫(F(X),START,END[,TOLERANCE])" describing the type of the integral function "∫'dx" and the input format of the arguments of the function as the syntax help window H along the lower end on the expression input window G (steps S4 to S8).

As described above, when the user is to input an arithmetic expression containing functions, the calculator switches between displaying and not displaying the syntax help window H depending on whether the current expression display mode is the 2D display mode of displaying the input arithmetic expression in an arrangement like that written in a textbook or the Line display mode of displaying the input arithmetic expression in a line. This makes it possible to perform help display of an input function expression as needed.

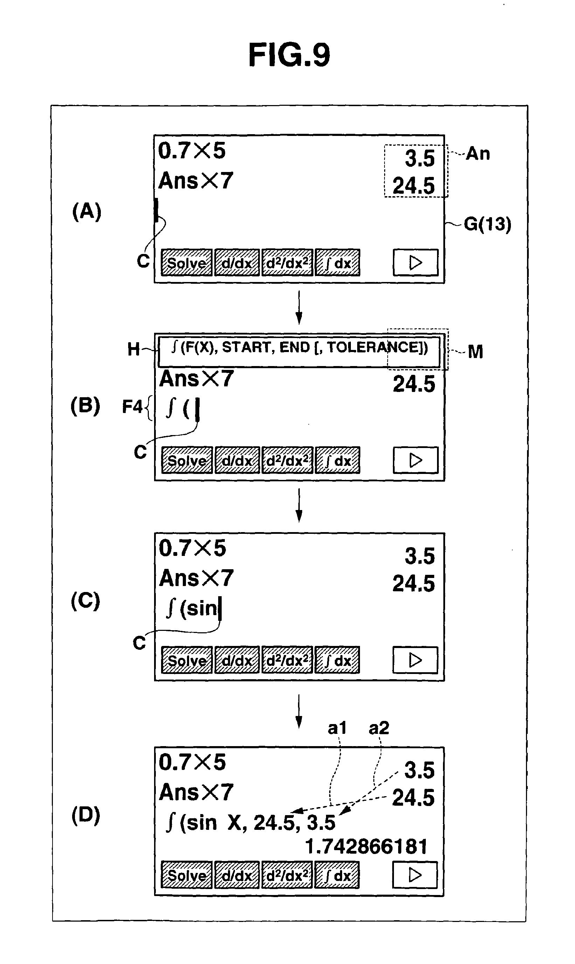

FIG. 9 is a view showing a display operation example for the syntax help window H when the user inputs an arithmetic expression containing functions by using a calculation history with the scientific calculator 10.

Assume that the scientific calculator 10 has executed prior arithmetic operation processing whose result is to be input and used for a subsequent arithmetic expression, and is displaying a calculation result history "3.5" "24.5" An, as indicated by "(A)" in FIG. 9. In this state, as indicated by "(B)" in FIG. 9, when the user inputs an integral function, the calculator displays "∫(" indicating the function (steps S1 to S3). Upon determining that the current expression display mode is the Line display mode (YES in step S4), the calculator determines that the position of the cursor C is in the lower half area of a predetermined area and determines the window position as "above" (steps S5 and S7). The calculator then displays the format explanatory information "∫(FX),START,END[,TOLERANCE])" about the integral function "∫(" as the syntax help window H along the upper end of the expression input window G spaced apart from the current position of the cursor C (step S8).

In this case, as indicated by a broken line M, the part "3.5" of the prior calculation result history An is hidden by the syntax help window H displayed along the upper end of the expression input window G. When, however, the user inputs the trigonometric function "sin" requiring no help display following the integral function "∫(" of the arithmetic expression, the syntax help window H is erased, as indicated by "(C)" in FIG. 9 (steps S9 to S11).

This allows the user to easily and smoothly input the desired arithmetic expression "∫(sin X,24.5,3.5···" containing functions as indicated by arrows a1 and a2 while looking at the calculation result history "3.5" "24.5" without being interrupted by the syntax help window H. In addition, when the syntax help window H is to be displayed, the window H is displayed in a window area spaced apart from the position of the cursor C to allow the user to easily and smoothly input a desired arithmetic expression containing functions without being interrupted by the syntax help window H.

Note that the technique for each process by the scientific calculator 10 described in each embodiment described above, i.e., the display control processing for the syntax help window H in accordance with each key input/display stage in calculation processing shown in the flowchart of FIG. 4 and the like, can be distributed as a program which can be executed by a computer by being stored in the external storage media 16 such as memory cards (ROM cards, RAM cards, and the like), magnetic disks (floppy disks, hard disks, and the like), optical disks (CD-ROMs, DVDs, and the like), and semiconductor memories. The computer of the scientific calculator reads out a program stored in the external storage medium 16 by using the storage medium reading unit 17, and controls operation based on the read program, thereby implementing the display control function for the syntax help window H upon the input of an arithmetic expression containing functions described in each embodiment and executing the same technique as that described above.

In addition, the program data for implementing the techniques described above can be transmitted in the form of program codes on a network N. The computer terminal having the function calculation function which is connected to the network N acquires the above program data by using the communication control unit 18. This makes it possible to implement the display control function for the syntax help window H upon the input of an arithmetic expression containing functions described above.

## Claims

1. A function calculator **characterized by** comprising:
a display unit (13);
input means (12) for inputting an arithmetic expression containing a function in accordance with user operation;
input expression display control means (S3, G) for causing the display unit to display an arithmetic expression input by the input means upon input of the arithmetic expression;
determination means (S2, S3, S15, S16) for determining whether a cursor present on an arithmetic expression displayed on the display unit is located at a position of a portion corresponding to a function; and
explanatory information display control means (19g, S8, S18, H) for, when the determination means determines that the cursor is located at a portion corresponding to a function, causing the display unit to display format explanatory information about the function on another window.

2. A calculator according to claim 1, which further comprises cursor moving means (12g, S12, S13, C) for moving a position of the cursor displayed on the display unit in a direction corresponding to user operation, and **characterized in that**
the determination means includes means (S15, S16) for, when the cursor moving means moves the cursor, determining whether the cursor is located at a symbol indicating a function contained in an arithmetic expression.

3. A calculator according to claim 2, **characterized in that** the determination means further includes means (S16) for determining whether the cursor is located at a portion corresponding to an argument of a function contained in an arithmetic expression.

4. A calculator according to claim 1, **characterized in that** the input expression display control means includes switching display means (S4, S14) for displaying an input arithmetic expression in one of a line display mode of displaying the arithmetic expression in a line and a natural display mode of displaying the arithmetic expression in a form written in a textbook, and
the explanatory information display control means displays format explanatory information on another window under a condition in which the input expression display control means displays in the line display mode (S4, S8, S14, S18) .

5. A calculator according to claim 1, which further comprises
error determination means (S21, WE) for determining whether there is an error in an arithmetic expression displayed by the input expression display control means, and
error position cursor movement control means (S24) for moving the position of the cursor to an erroneous portion of an arithmetic expression which is determined by the error determination means and displaying the cursor, and **characterized in that**
the determination means determines whether the cursor moved by the error position cursor movement display control means is at a portion corresponding to a function (S14, S16).

6. A calculator according to claim 1, **characterized by** further comprising explanatory information erase control means (S10, S11, S19, S20) for erasing format explanatory information when the input means performs input operation next to the arithmetic expression after the format explanatory information is displayed by the explanatory information display control means.

7. A calculator according to claim 1, **characterized in that** the explanatory information display control means includes means (S5~S7, S17) for changing a display position of format explanatory information in accordance with the position of the cursor.

8. A help display method for a function calculator including a display unit (13) and a key input unit (12) which inputs an arithmetic expression containing a function, the method **characterized by** comprises steps of:
causing the display unit to display an arithmetic expression input from the key input unit upon input of the arithmetic expression (S3);
determining whether a cursor present on an arithmetic expression displayed on the display unit is located at a position of a portion corresponding to a function (S2, S3, S15, S16); and
when it is determined in the determining step that the cursor is located at a portion corresponding to a function, causing the display unit to display format explanatory information about the function on a help window (S8, S18).

9. A method according to claim 8, **characterized in that** in the determining step, when the cursor is moved by cursor key operation of the input unit, it is determined whether the cursor is located at a symbol indicating a function contained in an arithmetic expression (S15, S16).

10. A method according to claim 9, **characterized in that** in the determining step, it is further determined whether the cursor is located at a portion corresponding to an argument of a function contained in an arithmetic expression (S16).

11. A method according to claim 8, **characterized in that** the function calculator includes switching display means (S4, S14) for displaying an input arithmetic expression in one of a line display mode of displaying the arithmetic expression in a line and a natural display mode of displaying the arithmetic expression in a form written in a textbook, and
in the explanatory information display step, format explanatory information is displayed on another window under a condition in which the function calculator displays in the line display mode (S4, S8, S14, S18).

12. A method according to claim 8, which further comprises steps of:
determining whether there is an error in an arithmetic expression displayed in the input expression display step (S21, WE), and
moving the position of the cursor to an erroneous portion of an arithmetic expression which is determined in the error determining step and displaying the cursor (S24), and **characterized in that**
in the determining step, it is determined whether the cursor moved in the error position cursor movement display step is at a portion corresponding to a function (S14, S16).

13. A method according to claim 8, **characterized by** further comprising a step of erasing format explanatory information when the input unit performs input operation next to the arithmetic expression after the format explanatory information is displayed in the explanatory information display step (S10, S11, S19, S20).

14. A method according to claim 8, **characterized in that** in the explanatory information display step, a display position of format explanatory information is changed in accordance with the position of the cursor (S5~S7, S17).
